# EUROPÄISCHE PATENTSCHRIFT

(11) **EP 4 568 761 B1**
(45) Veröffentlichungstag und Bekanntmachung des Hinweises auf die Patenterteilung: **01.04.2026**
(21) Anmeldenummer: 22765752.5
(22) Anmeldetag: 09.08.2022
(51) Int. Cl.: A63G 7/00

(54) **VERGNÜGUNGSANLAGE MIT REGENERATIVER ENERGIEVERSORGUNG**
AMUSEMENT FACILITY WITH REGENERATIVE ENERGY SUPPLY
INSTALLATION DE DIVERTISSEMENT AVEC ALIMENTATION EN ÉNERGIE RÉGÉNÉRATIVE

(43) Veröffentlichungstag der Anmeldung: 18.06.2025
(73) Patentinhaber: InDriveTec AG, 8050 Zürich (CH)
(72) Erfinder: VINZENS, Martin, 8047 Zürich (CH); JULEN, Eric, 8052 Zürich (CH)
(74) Vertreter: Leimgruber, Fabian Alfred Rupert
(86) Internationale Anmeldenummer: PCT/EP2022/072383
(87) Internationale Veröffentlichungsnummer: WO 2024/032879

(56) Entgegenhaltungen:
- WO-A1-2010/097498
- WO-A2-2007/050545
- US-A- 4 987 833
- US-A1- 2018 159 416
- US-B1- 9 084 941

## Beschreibung

### Technisches Gebiet

Die vorliegende Erfindung fällt in den technischen Bereich von Vergnügungsanlagen mit einem Fahrschienensystem und auf dem Fahrschienensystem geführten Fahrzeugen gemäss dem Oberbegriff des Anspruchs 1, insbesondere betrifft die vorliegende Erfindung Achterbahnen und vergleichbare Fahrgeschäfte.

### Stand der Technik, technologischer Hintergrund der Erfindung

Aus dem Stand der Technik sind diverse Vergnügungsanlage, wie Achterbahnen und ähnliche Fahrgeschäfte bekannt, bei welchen Fahrzeuge zur Mitnahme von Personen auf einem Fahrschienensystem geführt sind. Die Vergnügungsanlagen, bzw. die Fahrschienensysteme, sind mit Hilfe einer Tragstruktur auf einer Grundfläche, wie etwa einem Parkplatz, einer Freizeitfläche oder dergleichen, aufgebaut. Das Fahrschienensystem der Vergnügungsanlage ist in der Regel als dreidimensionales System ausgelegt und weist im Wesentlichen horizontal entlang der Grundfläche verlaufende Abschnitte und vertikal über der Grundfläche erhöhte Abschnitte auf, so dass sich die Fahrzeuge sowohl in diversen Richtungen entlang der Grundfläche als auch von der Grundfläche abgehoben bewegen können. Weiter können der Bewegung der Fahrzeuge entlang dem Fahrschienensystem auch zusätzliche Bewegungsarten überlagert sein, wie etwa ein Drehen oder Schwingen der Fahrzeuge.

Die Fortbewegung der Fahrzeuge entlang des Fahrschienensystems erfolgt über geeignete Antriebe, wie beispielsweise hydraulische Antriebe, Schwungscheibenantriebe und pneumatischen Antriebe. Aufgrund eines geringeren Energieverbrauchs verbreiten sich elektrische Antriebe immer mehr. Insbesondere die Verwendung von elektrischen Linearmotoren zum Antrieb der Fahrzeuge auf dem Fahrschienensystem bietet mehrere Vorteile. Sie sind verschleissfrei, können energetisch wirtschaftlich betrieben werden und ermöglichen eine gezielte Steuerung der Position und der Geschwindigkeit des Fahrzeugs. Ferner erlauben Linearmotorantriebe hohe Beschleunigungen und hohe Geschwindigkeiten, wie es von anderen Antrieben nicht ermöglicht wird.

Die Druckschriften EP 3311473 A1 und EP 392344 A1 beschreiben beispielsweise elektrische Linearmotorantriebssysteme für Vergnügungsanlagen, die auf dem Induktionsprinzip beruhen und elektrische Energie mittels Statoren am Fahrschienensystem und Magnetläufern an den Fahrzeugen in eine Antriebskraft und auch eine Bremskraft für die Fahrzeuge umwandeln können. Aus der Druckschrift WO 2007/050545 A2 ist eine Achterbahn bekannt, die einen Linearinduktionsmotor (LIM) und Wirbelstrombremsen verwendet. Der Motor wird teils mit Batterien und teils mit anderen Energiequellen betrieben, wobei die Batterien durch die Wirbelstrombremsen aufgeladen werden können.

Die bekannten Antriebssysteme für Vergnügungsanlagen sind energieintensiv, da hohe Geschwindigkeiten und Beschleunigungen erreicht werden sollen. Insbesondere steile Abschnitte bei Achterbahnen haben einen grossen Energieverbrauch, um die Fahrzeuge auf eine gewünschte Höhe auf dem Fahrschienensystem zu befördern. Zudem ist die Stromversorgung an den Betriebsorten der Vergnügungsanlagen, oft eingeschränkt, da die Anlagen auf freien Plätzen und oftmals abseits von infrastrukturell erschlossenen Gebieten aufgebaut und betrieben werden sollen. Ferner stammt der Betriebsstrom überwiegend aus nicht erneuerbaren Ressourcen, die nicht CO2-emissionsfrei in elektrischen Strom umgewandelt werden können.

Aus dem technischen Gebiet von Transportsystemen mit einer Monorail-Struktur ist aus US 4987833 A bekannt, eine photovoltaische Oberflächenschicht entlang des Fahrschienensystems der Monorail-Struktur anzubringen, um Solarenergie zu sammeln. Die Solarenergie wird in elektrische Energie umgewandelt, gespeichert und an Fahrzeuge des Transportsystems abgegeben.

### Darstellung der Erfindung

Es ist Aufgabe der vorliegenden Erfindung, eine Vergnügungsanlage dahingehend weiterzuentwickeln, dass deren Energieversorgung vereinfacht und zuverlässig ausgestaltet wird eine Umweltbelastung durch den Betrieb der Vergnügungsanlage reduziert wird und deren Betriebskosten vermindert werden.

Die dieser Erfindung einer Vergnügungsanlage zugrundeliegende Aufgabe wird gelöst durch die Merkmale des Anspruchs 1. Den Erfindungsgedanken weiterbildende Merkmale sind Gegenstand der Unteransprüche.

Eine Vergnügungsanlage mit einem Fahrschienensystem und auf dem Fahrschienensystem geführten Fahrzeugen nach der vorliegenden Erfindung weist einen Antrieb zum Antreiben der Fahrzeuge und eine Stromversorgung für den Antrieb auf. Das Fahrschienensystem weist erhöhte Abschnitte auf, die an einer Tragstruktur vertikal erhöht über einer Grundfläche angeordnet sind, auf der die Vergnügungsanlage aufgebaut ist. Erfindungsgemäss sind an der Tragstruktur eine Vielzahl von Fotovoltaikeinheiten und/oder Windenergieeinheiten zur Erzeugung elektrischer Energie angeordnet, die zur Speicherung der elektrischen Energie an wenigstens einen Energiespeicher angeschlossen sind. Der wenigstens eine Energiespeicher ist zur Versorgung des Antriebs und/oder einer Steuereinheit zur Steuerung der Vergnügungsanlage mit elektrischer Energie an den Antrieb und/ oder die Steuereinheit angeschlossen.

Zusammenfassend wird die Bauweise der Vergnügungsanlage mit einer Tragstruktur zur Ausgestaltung von vertikal erhöhten Abschnitten des Fahrschienensystems in das Energieversorgungskonzept der Anlage integriert und vorteilhaft genutzt. Die Tragstruktur, welche die erhöhten Abschnitte trägt, erzeugt zwischen der Grundfläche und dem Fahrschienensystem eine Nutzfläche, die zur Positionierung von Einheiten zur Erzeugung regenerativer Energie zum Beispiel in Form der Fotovoltaikeinheiten und/oder Windenergieeinheiten dient und zur Erzeugung von elektrischer Energie genutzt wird. Die Nutzfläche ist vorzugsweise vertikal ausgerichtet, wobei Tragelemente der Tragstruktur beispielsweise senkrecht zur Grundfläche verlaufen und somit die Energieerzeugungseinheiten, wie die Fotovoltaikeinheiten und/oder Windenergieeinheiten, senkrecht übereinander angeordnet werden können. Das Umfeld der Tragstruktur in den Bereichen der erhöhten Abschnitte des Fahrschienensystems ist aus Sicherheitsgründen in der Regel für Publikumsverkehr gesperrt, so dass die Tragstruktur für zusätzliche Funktionalitäten herkömmlicher Weise ungenutzt bleibt. Bei der Vergnügungsanlage nach der Erfindung, werden diese Bereiche und Abschnitte einem zusätzlichen Nutzen zugänglich gemacht. Die Energieerzeugungseinheiten unterstützen eine vom herkömmlichen Stromnetz unabhängige Energieversorgung basierend auf regenerativer Energie, wodurch eine Umweltbilanz der Vergnügungsanlage verbessert wird. Die Vergnügungsanlage ist zumindest teilweise für eine Selbstversorgung mit elektrischer Energie ausgelegt und ist vom herkömmlichen Stromnetzwerk unabhängiger.

In einer Ausführungsform der Vergnügungsanlage nach der vorliegenden Erfindung ist sowohl der Antrieb als auch die Steuerungseinheit zur Steuerung der Vergnügungsanlage an den wenigstens einen Energiespeicher angeschlossen. Somit kann nicht nur der Antrieb der Vergnügungsanlage durch selbsterzeugte Energie betrieben werden, sondern auch die Steuerung des Antriebs und des Betriebs der Vergnügungsanlage. Vorteilhaft kann die Steuereinheit auch zur Steuerung der Fotovoltaikeinheiten herangezogen werden.

Die Fotovoltaikeinheiten sind beispielsweise als flächige viereckige Solarpaneele ausgebildet. Eine Paneele umfasst eine Vielzahl von Solarzellen und kann als Baueinheit an der Tragstruktur für das Fahrschienensystem befestigt werden. In einer Ausführungsform der Vergnügungsanlage werden Paneelen mit einem Abstand zueinander vorgesehen, damit eine Windangriffsfläche, die durch mehrere Paneele gebildet wird, keine zu grossen Windkräfte auf die Tragstruktur erzeugen kann. Ferner können die Fotovoltaikeinheiten in einem Winkel zur Vertikalen verbaut werden, um einen Einfallswinkel der Sonnenbestrahlung zu begünstigen..

Alternative können die Fotovoltaikeinheiten zum Beispiel als Folien mit flexiblen Solarzellen ausgebildet sein. Die Folien können beispielsweise an oder zwischen Elementen der Tragstruktur vorgesehen sein.

Vorteilhaft weist die Tragstruktur für das Fahrschienensystem eine Vielzahl von einzelnen Tragelementen auf, die jeweils Montagemittel zur lösbaren Befestigung der Fotovoltaikeinheiten und/oder Windenergieeinheiten an den Tragelementen umfassen. Diese Energieerzeugungseinheiten können nach dem Aufbauen der Tragstruktur aus den einzelnen Tragelementen an diesen montiert werden. Es ist aber auch möglich Fotovoltaikeinheiten und/oder Windenergieeinheiten integriert in oder an den Tragelementen vorzusehen, so dass diese gleichzeitig mit dem Aufbauen der Tragstruktur bereitgestellt sind. Weiter weisen die Tragelemente vorteilhaft jeweils eine Verkabelung auf, die eine elektrische Leitung und Anschlüsse umfasst. Beim Aufbauen der Tragstruktur durch Aneinanderfügen der Tragelemente können auch die Verkabelungen der Tragelemente miteinander mit Hilfe der Anschlüsse verbunden werden, so dass an der Tragstruktur ein Leitersystem vorgesehen ist, das mit dem Energiespeicher verbunden werden kann. Mit den Tragelementen nach der Erfindung können die Energieerzeugungseinheiten in einfacher Weise gemeinsam mit der Tragstruktur auf- und abgebaut werden. Dies ist insbesondere bei Vergnügungsanlage vorteilhaft, die an unterschiedlichen Orten zur Verfügung stellt und hierfür häufig auf- und abgebaut werden müssen.

Bei einer weiteren Ausführungsform der Vergnügungsanlage nach der vorliegenden Erfindung ist eine Fotovoltaikeinheit aus einer Vielzahl von Solarzellen aufgebaut und zumindest zwischen einigen benachbarten Solarzellen ist ein Durchgang vorgesehen. Ist die Fotovoltaikeinheiten beispielsweise als Solarpaneele vorgesehen, weist diese Paneele mehrere Durchgänge zwischen einzelnen Solarzellen auf. Die Durchgänge bilden einen Winddurchgang, so dass eine Windkraft durch Wind, der auf die Fotovoltaikeinheiten trifft, verringert werden kann. Insbesondere bei Achterbahnen, die eine grosse vertikale Fläche zwischen der Grundfläche und dem Fahrschienensystem zum Anbringen von Fotovoltaikeinheiten zur Verfügung stellen, muss eine Windkraft auf die Tragstruktur, die durch die Fotovoltaikeinheiten erzeugt wird, berücksichtigt werden. Dabei müssen jedoch nicht zwischen jeden benachbarten Solarzellen Durchgänge vorgesehen werden. Die Anzahl ist im Wesentlichen abhängig von der Grösse der Fläche der Fotovoltaikeinheiten. Wie oben erwähnt, können die Fotovoltaikeinheiten zudem beabstandet zueinander angeordnet werden.

In einer Ausführungsform der Vergnügungsanlage nach der Erfindung weisen die länglichen Tragelementen der Tragstruktur Montagemittel für die Fotovoltaikeinheiten und/oder Windenergieeinheiten derart auf, dass die Einheiten relativ zu den Tragelementen beweglich angeordnet sind. Die Fotovoltaikeinheiten können mittels der Montagemittel beispielsweise relative zu den Tragelementen gekippt werden, so dass sie mehr horizontal oder mehr vertikal ausgerichtet werden können. Alternativ oder zusätzlich können die Fotovoltaikeinheiten relative zur Längsachse der Tragelemente verdreht, bzw. um diese herum gedreht werden. Die Windenergieeinheiten können vorteilhaft in Richtung zum Wind verdreht werden. Durch die beweglich an der Tragstruktur angeordneten Einheiten kann deren Ausrichtung zur Sonne und/oder zum Wind optimiert werden. Die Montagemittel können hierfür z. B. als Schwenkelemente oder Scharniere ausgebildet sein. Es können auch teleskopische Gestänge verwendet werden, mit welchen Bereiche einer Fotovoltaikeinheit relativ zur Tragstruktur ausgestellt und herangezogen werden können. Die Montagemittel können z. B. mit Elektromotoren betrieben und über eine Steuereinheit kontrolliert werden.

In einer vorteilhaften Ausgestaltung sind an der Tragstruktur und/oder den Fotovoltaikeinheiten und/oder den Windenergieeinheiten mehrere Messsensoren zur Erfassung von Parametern bezüglich einer Sonneneinstrahlung und/oder einer Windeinwirkung und eine Steuereinheit zur Steuerung einer Ausrichtung der Fotovoltaikeinheiten und/oder Windenergieeinheiten in Abhängigkeit einer Sonneneinstrahlung und/oder einer Windeinwirkung vorgesehen. Die Steuereinheit kann die Montagemittel zur beweglichen Montage der Fotovoltaikeinheiten und/oder Windenergieeinheiten ansteuern, so dass die Fotovoltaikeinheiten und/oder Windenergieeinheiten in einer optimierten Position an der Tragstruktur ausgerichtet werden. Es können auch weitere Messsensoren zur Erfassung zusätzlicher Parameter, wie Feuchtigkeit oder Verschmutzung, in die Ausrichtung der Fotovoltaikeinheiten und/oder Windenergieeinheiten einfliessen. Ferner kann beispielsweise die Stromerzeugung der Energieerzeugungseinheiten überwacht werden.

Bei einer Ausführungsform einer Vergnügungsanlage nach der vorliegenden Erfindung bildet das Fahrschienensystem ein geschlossenes, umlaufendes Schienensystem mit mehreren vertikal erhöhten Abschnitten. Ein solches Fahrschienensystem liegt z. B. bei Achterbahnen vor. Ein umlaufendes Schienensystem hat den Vorteil, dass die Vergnügungsanlage eine platzsparende Ausgestaltung aufweist und gleichzeitig die Anzahl an Fotovoltaikeinheiten auf dem Platz erhöht werden kann.

Weiter kann das Fahrschienensystem Flächenbereiche der Grundfläche zumindest teilweise umschliessen. Diese Flächenbereiche sind im Wesentlichen horizontal ausgerichtet und für den Publikumsverkehr aus Sicherheitsgründen abgeriegelt. Vorteilhaft können auf diesen Flächenbereichen eine Vielzahl von Einheiten zur Erzeugung regenerativer Energie, wie z. B. Fotovoltaikeinheiten und/oder Windenergieeinheiten, zur Erzeugung elektrischer Energie angeordnet werden, die ebenfalls an den Energiespeicher angeschlossen sind. Diese Einheiten können ebenfalls Messsensoren zur Erfassung von Parametern bezüglich einer Sonneneinstrahlung und/oder einer Windeinwirkung aufweisen und zur Steuerung ihrer Ausrichtung an die Steuereinheit angeschlossen sein. Diese zusätzlichen Einheiten zur Erzeugung regenerativer Energie tragen zu einer autonomen Energieversorgung bei und örtliche Energienetze werden weiter entlastet.

In einer weiteren Ausführungsform einer Vergnügungsanlage nach der vorliegenden Erfindung ist der Antrieb als elektromagnetischer Linearantrieb mit einer Vielzahl von Magnetläufern und einer Vielzahl von Statoren ausgebildet, die zum Antrieb der Fahrzeuge zusammenwirken. Vorzugsweise ist der Antrieb als linearer Synchronmotor ausgebildet. Elektromagnetische Linearantriebe haben im Vergleich zu hydraulischen oder pneumatischen Antrieben einen geringeren Energieverbrauch, so dass der Anteil an durch mit der Vergnügungsanlage erzeugter regenerativer Energie am Gesamtverbrauch der Anlage grösser ist und somit die Umweltbelastung niedriger ist.

In einer Variante ist die Vielzahl an Magnetläufern an den Fahrzeugen der Vergnügungsanlage und die Vielzahl an Statoren ist am Schienensystem ausgebildet. Die Statoren können somit direkt oder indirekt über Wechselrichter mit dem Energiespeicher verbunden sein und mit Energie versorgt werden. Die Magnetläufer erzeugen im Zusammenwirken mit den Statoren eine Antriebskraft für die Fahrzeuge. Vorteilhaft ist an wenigstens einem Fahrzeug ein Induktionsgenerator vorgesehen, der zur Rückspeisung erzeugter elektrischer Energie in den Energiespeicher vorgesehen ist. Der Induktionsgenerator ist zum Beispiel an Abwärtsabschnitten des Schienensystems vorgesehen, die für eine Abwärtsfahrt der Fahrzeuge vorgesehen sind. Ausserdem kann der Induktionsgenerator an Wirbelstrombremsen angeschlossen sein; vorzugsweise werden aus Sicherheitsgründen passive Wirbelstrombremsen empfohlen. Nach der Erfindung sind mehrere unabhängige Energiespeiserichtungen möglich, wodurch die Energiegewinnung optimiert und der Verbrauch verringert werden kann.

Somit kann zusätzlich zur Energiegewinnung der Fotovoltaikeinheiten und/oder der Windenergieeinheiten auch Energie durch den Induktionsgenerator gewonnen werden, die für den Betrieb der Vergnügungsanlage zur Verfügung steht. Vorzugsweise sind die Statoren und Magnetläufer des Linearantriebs Bestandteile des Induktionsgenerators, bzw. der Linearantrieb übernimmt die Funktion eines Induktionsgenerators, wenn generatorische Energie vom Magnetläufer auf den Stator übertragen wird.

Weitere Ausführungsformen der erfindungsgemässen Vergnügungsanlage und deren zugehörigen Vorteile sind Gegenstand der Figur und deren detaillierte Beschreibung.

### Kurze Beschreibung der Figur

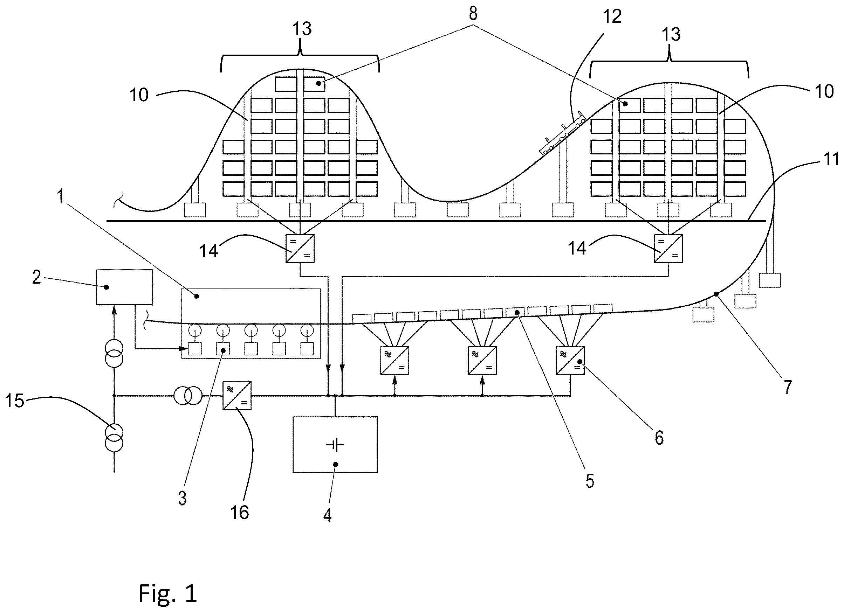

Im Folgenden wird die Erfindung anhand einer Figur 1 beispielhaft erläutert. An dieser Stelle wird darauf hingewiesen, dass die Figur keine einschränkende Wirkung auf den vorliegenden Erfindungsgegenstand als solches hat, sondern lediglich eine exemplarische Ausführungsform des Erfindungsgedankens zeigt, wie dieser sich in den Ansprüchen darstellt ist.

Dabei zeigt Figur 1 rein schematisch eine Vergnügungsanlage nach der vorliegenden Erfindung, bei der Fotovoltaikeinheiten als Energieerzeugungseinheiten verwendet werden.

In Figur 1 sind auszugsweise einzelne Einheiten einer Vergnügungsanlage nach der Erfindung gezeigt. Dabei sind im oberen Teil der Figur 1 konstruktive Baueinheiten schematisch dargestellt, welche den Aufbau der Anlage illustrieren. Ein Fahrschienensystem 7 ist an einer Tragstruktur vorgesehen, die aus mehreren länglichen Tragelementen 10 aufgebaut ist. Die Tragelemente 10 sind im Wesentlichen senkrecht auf einer Grundfläche 11 aufgestellt, auf welcher die Vergnügungsanlage aufgebaut ist. Auf dem Fahrschienensystem 7 ist beispielhaft ein Fahrzeug 12 gezeigt, das aus mehreren einzelnen Wagen bestehen kann. In Figur 1 sind zwei erhöhte Abschnitte 13 des Fahrschienensystems 7 gezeigt, die mittels der Tragelemente 10 der Tragstruktur vertikal erhöht über der Grundfläche 11 angeordnet sind. An den Tragelementen 10 der Tragstruktur sind eine Vielzahl von Fotovoltaikeinheiten 8 angebracht. Die Fotovoltaikeinheiten 8 sind beispielhaft beidseits der Tragelemente 10 übereinander an diesen angeordnet. Grundsätzlich können die Fotovoltaikeinheiten 8 auch zwischen zwei Tragelementen 10 angeordnet und an gegenüberliegenden Seiten von diesen getragen werden.

Vorteilhaft sind die Fotovoltaikeinheiten 8 mit Hilfe von Montagemitteln (nicht gezeigt) an den Tragelementen 10 lösbar befestigt, die ein Schwenken der Fotovoltaikeinheiten 8 um die Tragelemente 10 ermöglichen. Es können auch Montagearme (nicht gezeigt) von den Tragelementen 10 beispielweise horizontal abragen, um welche die Fotovoltaikeinheiten 8 um eine im Wesentlichen horizontale Achse schwenkbar angeordnet sind. Die Montagemittel und Montagearme können als Positionierhilfen zur Ausrichtung der Fotovoltaikeinheiten 8 relative zur Tragstruktur bzw. relative zur Grundfläche 11 betrachtet werden. Mit den Positionierhilfen können die Fotovoltaikeinheiten 8 eine optimale Ausrichtung zur Sonneneinstrahlung einnehmen und damit die Energiegewinnung maximieren.

Die einzelnen Fotovoltaikeinheiten 8 sind an eine Verkabelung (nicht gezeigt) angeschlossen, die entlang der Tragelemente 10 zur Grundfläche 11 geführt wird. Die Verkabelung umfasst vorteilhaft elektrische Leiter an den Fotovoltaikeinheiten 8 zum Ableiten eines in den Fotovoltaikeinheiten 8 erzeugten Stroms und eine Hauptleitung entlang jedes Tragelements, die zur Grundfläche verläuft. Die elektrischen Leiter der Fotovoltaikeinheiten 8 werden mittels elektrischen Anschlüssen an die Hauptleitung angeschlossen. Somit bilden die elektrischen Leiter der Fotovoltaikeinheiten, die Hauptleitung und die elektrischen Anschlüsse die Verkabelung für die Fotovoltaikeinheiten 8.

Im unteren Teil der Figur 1 sind Baueinheiten der Energieversorgung und - gewinnung sowie eines Antriebs der Vergnügungsanlage schematisch dargestellt, welche das Energiekonzept und das Antriebskonzept der Vergnügungsanlage veranschaulichen.

Die Vergnügungsanlage weist einen linearen Synchronantrieb auf. Hierfür sind am Fahrschienensystem 7 sind entlang der Fahrschienen eine Vielzahl von Statoren 4 und am Fahrzeug 12 sind eine Vielzahl von Magnetläufern 9 angeordnet, welche durch Induktion eine Antriebskraft für die Fahrzeuge erzeugt. Ein mögliche Variante eines solchen Antriebs ist zum Beispiel in dem Patentdokument EP 3 923 444 A1 der Anmelderin beschrieben. Darin beschriebene Details in Bezug auf die Ausgestaltung des linearen Synchronantrieb für die Vergnügungsanlage werden in die Beschreibung der vorliegenden Erfindung mit einbezogen. Grundsätzlich ist aber nicht ausgeschlossen, dass die Fahrzeuge der Vergnügungsanlage mit einer anderen Art von elektrischem Antrieb betrieben werden.

Wie in Figur 1 gezeigt, weist das Energiekonzept der Vergnügungsanlage einen Energiespeicher 4, insbesondere einen Akkumulator, auf. Alternative können beispielsweise auch Superkondensatoren oder Schwungradspeicher zur Energiespeicherung verwendet werden. Die Fotovoltaikeinheiten 8 eines erhöhten Abschnitts 13 des Fahrschienensystem 7 bilden eine Gruppe von Fotovoltaikeinheiten und sind mittels der Verkabelung an einen Umrichter 14 angeschlossen. In der gezeigten Variante ist für jeden erhöhten Abschnitt 13 ein Umrichter 14 vorgesehen. Je nach Anzahl der Fotovoltaikeinheiten und räumlicher Ausdehnung der Fotovoltaikeinheiten können aber auch mehrere Umrichter vorgesehen sein. Die Umrichter 14 sind dem Energiespeicher 4 vorgeschaltet und speisen von den Fotovoltaikeinheiten 8 erzeugten Solarstrom in den Energiespeicher 4 ein. Dabei ist es vorteilhaft, dass die Einspeisung auf DC-Strom Ebene erfolgt. Es wird vorzugsweise ein DC/DC Wandler mit Maximum Power Point Tracking (MPPT) vorgehen. Bei herkömmlichen Solarinverter erfolgt dies im Gegensatz dazu via Wechselstrom.

Die Statoren 5 des Linearantriebs werden von dem Energiespeicher zum Antrieb der Fahrzeuge 12 der Vergnügungsanlage mit regenerativ erzeugter, elektrischer Energie versorgt. Hierfür können mehrere Statoren 5 zu einer Statorgruppe zusammengefasst und an eine Energieversorgungseinheit 6 angeschlossen werden, die von dem Energiespeicher gespeist wird. Als Energieversorgungseinheit können beispielsweise Einspeisekonverter, wie etwa Gleichrichter 16 oder bidirektionale Netzumrichter, verwendet werden.

Das Energiekonzept der gezeigten Ausführungsform der Vergnügungsanlage umfasst ferner einen Anschluss an das lokale Stromversorgungsnetz, wie etwa an das öffentliche Drehstromnetz. Ein solcher Anschluss ist im Sinne der Erfindung optional. Er kann beispielsweise zur Ergänzung der Stromversorgung mittels des Energiespeichers dienen oder auch die Energieversorgung der Vergnügungsanlage in Gebieten, in welchen eine Solareinstrahlung zu gering ist, um den Betrieb der Vergnügungsanlage sicherzustellen, übernehmen. In der gezeigten Ausführungsform wird das lokale Stromversorgungsnetz über einen Transformator 15 an den Energiespeicher 4 angeschlossen. Somit kann dieser auch über das lokale Stromversorgungsnetz geladen werden.

Weiter weist die Vergnügungsanlage eine zentrale Steuereinheit 2 auf, welche den Fahrbetrieb der Anlage, insbesondere den Linearantrieb, steuert. Vorteilhaft ist die Steuereinheit 2 auch an Fotovoltaikeinheiten 8 angeschlossen und steuert die Ausrichtung der Fotovoltaikeinheiten 8 durch die Montagemittel und die Einspeisung von Solarenergie in den Energiespeicher 4. Die Steuereinheit 2 wird ebenfalls von dem Energiespeicher mit elektrischem Strom versorgt. Vorteilhaft ist die Steuereinheit 2 zusätzlich als Backup mit dem lokalen Stromversorgungsnetz verbunden.

Die Steuereinheit 2 steuert den Betrieb der Vergnügungsanlage, insbesondere die Beschleunigung und Verzögerung der Fahrzeuge 12 mittels des Linearantriebs. Ferner steuert die Steuereinheit 2 eine Reibrolleneinheit 3, die zur Kontrolle einer Geschwindigkeit der Fahrzeuge 12 vorgesehen ist. Die Reibrolleneinheit 3 ist in einer Station 1 zum Ein- und Aussteigen von Passagieren aus den Fahrzeugen 12 vorgesehen.

Obwohl die Erfindung mittels der Figur und der zugehörigen Beschreibung erläutert wurde, ist diese Darstellung illustrativ und beispielhaft zu verstehen und nicht als die Erfindung einschränkend. Um die Erfindung nicht zu verklären wohlbekannte Strukturen und Techniken nicht im Detail gezeigt und beschrieben sein, wie etwa die Funktionsweise des elektrischen Synchronantriebs oder die Funktionsweise von Solarpaneelen. Es versteht sich, dass Fachleute Änderungen und Abwandlungen machen können, ohne den Umfang der folgenden Ansprüche zu verlassen.

Die Erfindung wurde anhand von Figur 1 am Beispiel von Fotovoltaikeinheiten als Einheiten zur Erzeugung regenerativer Energie beschrieben. In gleicherweise können aber auch Einheiten zur Erzeugung von Energie mittels Windkraft verwendet werden. Die Weiterleitung der Energie, die Energiespeicherung, Energierückführung, etc. können dabei wie im Beispiel der Fotovoltaikeinheiten ausgeführt werden.

### Bezugszeichenliste

- 1: Station
- 2: Steuereinheit
- 3: Reibrolleneinheit
- 4: Energiespeicher
- 5: Statoren
- 6: Energieversorgungseinheit
- 7: Fahrschienensystem
- 8: Fotovoltaikeinheiten
- 9: Magnetläufer
- 10: Tragelemente
- 11: Grundfläche
- 12: Fahrzeug
- 13: erhöhter Abschnitt
- 14: Umrichter
- 15: Transformator
- 16: Gleichrichter

## Patentansprüche

1. Vergnügungsanlage mit einem Fahrschienensystem und auf dem Fahrschienensystem (7) geführten Fahrzeugen (12), die einen Antrieb zum Antreiben der Fahrzeuge (12) und eine Stromversorgung für den Antrieb aufweist, wobei das Fahrschienensystem (7) erhöhte Abschnitte (13) umfasst, die an einer Tragstruktur vertikal erhöht über einer Grundfläche (11) angeordnet sind, auf der die Vergnügungsanlage aufgebaut ist, **dadurch gekennzeichnet, dass**
die Tragstruktur im Bereich der erhöhten Abschnitte (13) zwischen der Grundfläche (11) und dem Fahrschienensystem (7) eine Nutzfläche ausbildet, wobei an der Tragstruktur im Bereich der Nutzfläche an oder zwischen Tragelementen (10) der Tragstruktur eine Vielzahl von Fotovoltaikeinheiten (8) und/oder Windenergieeinheiten zur Erzeugung elektrischer Energie angeordnet sind, die zur Speicherung der elektrischen Energie an wenigstens einen Energiespeicher (4) angeschlossen sind, wobei der wenigstens eine Energiespeicher (4) zur Versorgung des Antriebs und/oder einer Steuereinheit zur Steuerung der Vergnügungsanlage mit elektrischer Energie an den Antrieb und/oder die Steuereinheit angeschlossen ist.

2. Vergnügungsanlage nach einem der vorhergehenden Ansprüche, **dadurch gekennzeichnet, dass** die Fotovoltaikeinheiten (8) beabstandet zueinander angeordnet sind.

3. Vergnügungsanlage nach einem der vorhergehenden Ansprüche, **dadurch gekennzeichnet, dass** eine Fotovoltaikeinheit (8) aus einer Vielzahl von Solarzellen aufgebaut ist, wobei zumindest zwischen einigen benachbarten Solarzellen ein Durchgang vorgesehen ist.

4. Vergnügungsanlage nach Anspruch 1, **dadurch gekennzeichnet, dass** die Windenergieeinheiten als Windräder ausgebildet sind.

5. Vergnügungsanlage nach einem der vorhergehenden Ansprüche, **dadurch gekennzeichnet, dass** die Tragstruktur eine Vielzahl von länglichen Tragelementen (10) aufweist, die ein Montagemittel zur lösbaren Montage von Fotovoltaikeinheiten (8) und/oder Windenergieeinheiten und/oder eine Verkabelung zur Ausbildung eines Leitungssystems an der Tragstruktur aufweist.

6. Vergnügungsanlage nach einem der vorhergehenden Ansprüche, **dadurch gekennzeichnet, dass** die Tragstruktur eine Vielzahl von länglichen Tragelementen (10) mit Montagemitteln für die Fotovoltaikeinheiten (8) und/oder Windenergieeinheiten derart aufweist, dass die Einheiten relativ zu den Tragelementen (10) beweglich angeordnet sind.

7. Vergnügungsanlage nach dem vorhergehenden Anspruch, **dadurch gekennzeichnet, dass** an der Tragstruktur und/oder den Fotovoltaikeinheiten (8) und/oder den Windenergieeinheiten Messsensoren zur Erfassung von Parametern bezüglich einer Sonneneinstrahlung und/oder einer Windeinwirkung und eine Steuereinheit zur Steuerung einer Ausrichtung der Fotovoltaikeinheiten und/oder der Windenergieeinheiten in Abhängigkeit einer Sonneneinstrahlung und/oder einer Windeinwirkung vorgesehen sind.

8. Vergnügungsanlage nach einem der vorhergehenden Ansprüche, **dadurch gekennzeichnet, dass** das Fahrschienensystem (7) ein geschlossenes, umlaufendes Schienensystem bildet, mit mehreren vertikal erhöhten Abschnitten (13).

9. Vergnügungsanlage nach einem der vorhergehenden Ansprüche, **dadurch gekennzeichnet, dass** das Fahrschienensystem (7) Flächenbereiche der Grundfläche (1) zumindest teilweise umschliesst und auf den Flächenbereichen eine Vielzahl von Fotovoltaikeinheiten und/oder Windenergieeinheiten zur Erzeugung elektrischer Energie angeordnet sind.

10. Vergnügungsanlage nach einem der vorhergehenden Ansprüche, **dadurch gekennzeichnet, dass** der Antrieb als elektromagnetischer Linearantrieb mit einer Vielzahl von Magnetläufern (9) und einer Vielzahl von Statoren (5) ausgebildet ist, die zum Antrieb der Fahrzeuge (12) zusammenwirken.

11. Vergnügungsanlage nach dem vorhergehenden Anspruch, **dadurch gekennzeichnet, dass** der Antrieb als linearer Synchronmotor ausgebildet ist.

12. Vergnügungsanlage nach einem der Ansprüche 9 oder 10, **dadurch gekennzeichnet, dass** die Vielzahl an Magnetläufern (9) an Fahrzeugen (12) der Vergnügungsanlage und die Vielzahl an Statoren (5) am Schienensystem (7) ausgebildet sind.

13. Vergnügungsanlage nach einem der vorhergehenden Ansprüche, **dadurch gekennzeichnet, dass** an wenigstens einem Fahrzeug (12) ein Induktionsgenerator vorgesehen ist, der zur Rückspeisung erzeugter elektrischer Energie in den Energiespeicher (4) vorgesehen ist.

14. Vergnügungsanlage nach einem der vorhergehenden Ansprüche, **dadurch gekennzeichnet, dass** die Vielzahl an Fotovoltaikeinheiten (8) und/oder Windenergieeinheiten in Gruppen von Fotovoltaikeinheiten und/oder Windenergieeinheiten unterteilt sind und jeder Gruppe wenigstens ein Umrichter (14) zugeordnet ist, der dem Energiespeicher (4) vorgeschaltet ist.

15. Vergnügungsanlage nach einem der vorhergehenden Ansprüche, **dadurch gekennzeichnet, dass** ein elektrischer Linearantrieb mit mehreren Gruppen von Statoren (5) vorgesehen ist, die am Schienensystem (7) zum Zusammenwirken mit an den Fahrzeugen (12) angeordneten Magnetläufern (9) des elektrischen Linearantriebs angeordnet sind, und jeder Gruppe von Statoren (5) eine Energieversorgungseinheit (6) zugeordnet ist, die an den Energiespeicher (4) angeschlossen ist.

16. Vergnügungsanlage nach einem der vorhergehenden Ansprüche, **dadurch gekennzeichnet, dass** eine Energieeinspeisung auf DC-Strom Ebene erfolgt, wobei ein DC/DC Wandler mit Maximum Power Point Tracking (MPPT) vorgehen ist.

## Claims

1. An amusement facility having a running rail system and vehicles (12) guided on the running rail system (7), which has a drive for driving the vehicles (12) and a power supply for the drive, wherein the running rail system (7) comprises elevated sections (13) which are elevated vertically on a support structure over a base area (11) on which the amusement facility is constructed, **characterized in that**
the support structure forms a usable area in the region of the elevated sections (13) between the base area (11) and the running rail system (7), wherein a multiplicity of photovoltaic units (8) and/or wind power units for generating electrical energy are arranged on the support structure in the region of the usable area on or between support elements (10) of the support structure, which photovoltaic and/or wind power units are connected to at least one energy storage device (4) for storing the electrical energy, wherein the at least one energy storage device (4) is connected to the drive and/or a control unit for controlling the amusement facility to supply electrical energy to the drive and/or the control unit.

2. The amusement facility according to any one of the preceding claims, **characterized in that** the photovoltaic units (8) are arranged spaced from one another.

3. The amusement facility according to any one of the preceding claims, **characterized in that** a photovoltaic unit (8) is constructed from a multiplicity of solar cells, wherein a passage is provided at least between a few adjacent solar cells.

4. The amusement facility according to Claim 1, **characterized in that** the wind power units are formed as wind turbines.

5. The amusement facility according to any one of the preceding claims, **characterized in that** the support structure has a multiplicity of elongated support elements (10), which have an installation means for the detachable installation of photovoltaic units (8) and/or wind power units and/or cabling for forming a line system on the support structure.

6. The amusement facility according to any one of the preceding claims, **characterized in that** the support structure has a multiplicity of elongated support elements (10) having installation means for the photovoltaic units (8) and/or wind power units such that the units are arranged in a movable manner relative to the support elements (10).

7. The amusement facility according to the preceding claim, **characterized in that** measuring sensors for detecting parameters relating to solar irradiation and/or the action of wind and a control unit for controlling an alignment of the photovoltaic units and/or the wind power units depending on solar irradiation and/or the action of wind are provided on the support structure and/or the photovoltaic units (8) and/or the wind power units.

8. The amusement facility according to any one of the preceding claims, **characterized in that** the running rail system (7) forms a closed, surrounding rail system with a plurality of vertically elevated sections (13).

9. The amusement facility according to any one of the preceding claims, **characterized in that** the running rail system (7) at least partially encloses surface regions of the base area (1) and a multiplicity of photovoltaic units and/or wind power units for generating electrical energy are arranged on the surface regions.

10. The amusement facility according to any one of the preceding claims, **characterized in that** the drive is formed as an electromagnetic linear drive with a multiplicity of magnet rotors (9) and a multiplicity of stators (5) which cooperate to drive the vehicles (12).

11. The amusement facility according to the preceding claim, **characterized in that** the drive is formed as a linear synchronous motor.

12. The amusement facility according to either of Claims 9 and 10, **characterized in that** the multiplicity of magnet rotors (9) are formed on vehicles (12) of the amusement facility and the multiplicity of stators (5) are formed on the rail system (7).

13. The amusement facility according to any one of the preceding claims, **characterized in that** an induction generator is provided on at least one vehicle (12), which is provided for feeding generated electrical energy back into the energy storage device (4).

14. The amusement facility according to any one of the preceding claims, **characterized in that** the multiplicity of photovoltaic units (8) and/or wind power units are divided into groups of photovoltaic units and/or wind power units and at least one converter (14) is assigned to each group, which converter is connected upstream of the energy storage device (4).

15. The amusement facility according to any one of the preceding claims, **characterized in that** an electrical linear drive is provided with a plurality of groups of stators (5) which are arranged on the rail system (7) for cooperating with magnet rotors (9) of the electrical linear drive which are arranged on the vehicles (12), and an energy supply unit (6), which is connected to the energy storage device (4), is assigned to each group of stators (5).

16. The amusement facility according to any one of the preceding claims, **characterized in that** energy feed-in takes place at DC current level, wherein a DC/DC converter with maximum power point tracking (MPPT) is provided.

## Revendications

1. Installation de divertissement avec un système de rails de roulement et des véhicules (12) guidés sur le système de rails de roulement (7), qui comporte un système d'entraînement pour entraîner les véhicules (12) et une alimentation en courant pour le système d'entraînement, sachant que le système de rails de roulement (7) comprend des sections surélevées (13) qui sont disposées sur une structure porteuse verticalement surélevée sur une surface de base (11), sur laquelle l'installation de divertissement est construite, **caractérisée en ce que**
la structure porteuse constitue une surface utile dans la zone des sections surélevées (13) entre la surface de base (11) et le système de rails de roulement (7), sachant qu'une pluralité d'unités photovoltaïques (8) et/ou d'unités à énergie éolienne pour la production d'énergie électrique sont disposées sur la structure porteuse dans la zone de la surface utile sur ou entre des éléments porteurs (10) de la structure porteuse, qui sont raccordées pour l'accumulation d'énergie électrique à au moins un accumulateur d'énergie (4), sachant qu'au moins un accumulateur d'énergie (4) pour l'alimentation du système d'entraînement et/ou d'une unité de commande pour commander l'installation de divertissement en énergie électrique est raccordée au système d'entraînement et/ou à l'unité de commande.

2. Installation de divertissement selon la revendication précédente, **caractérisée en ce que** les unités photovoltaïques (8) sont disposées à distance les unes des autres.

3. Installation de divertissement selon l'une quelconque des revendications précédentes, **caractérisée en ce qu'**une unité photovoltaïque (8) est constituée à partir d'une pluralité de cellules solaires, sachant qu'au moins un passage est prévu entre plusieurs cellules solaires voisines.

4. Installation de divertissement selon la revendication 1, **caractérisée en ce que** les unités d'énergie éolienne sont constituées sous la forme d'éoliennes.

5. Installation de divertissement selon l'une quelconque des revendications précédentes, **caractérisée en ce que** la structure porteuse comporte une pluralité d'éléments porteurs longitudinaux (10), qui comportent un moyen de montage pour le montage amovible des unités photovoltaïques (8) et/ou des unités d'énergie éolienne et/ou un câblage pour constituer un système conducteur sur la structure porteuse.

6. Installation de divertissement selon l'une quelconque des revendications précédentes, **caractérisée en ce que** la structure porteuse comporte une pluralité d'éléments porteurs longitudinaux (10) avec des moyens de montage pour les unités photovoltaïques (8) et/ou les unités d'énergie éolienne de telle manière que les unités sont disposées de façon mobile par rapport aux éléments porteurs (10).

7. Installation de divertissement selon la revendication précédente, **caractérisée en ce que** sur la structure porteuse et/ou les unités photovoltaïques (8) et/ou les unités d'énergie éolienne sont prévus des capteurs de mesure pour la saisie de paramètres concernant un ensoleillement et/ou un effet du vent et une unité de commande pour commander une orientation des unités photovoltaïques et/ou des unités d'énergie éolienne en fonction d'un ensoleillement et/ou d'un effet du vent.

8. Installation de divertissement selon l'une quelconque des revendications précédentes, **caractérisée en ce que** le système de rails de roulement (7) forme un système de rails fermé, périphérique avec plusieurs sections verticalement surélevées (13).

9. Installation de divertissement selon l'une quelconque des revendications précédentes, **caractérisée en ce que** le système de rails de roulement (7) renferme au moins en partie des zones de surface de la surface de base (1) et un grand nombre d'unités photovoltaïques et/ou d'unités d'énergie éolienne sont disposées sur les zones de surface pour produire de l'énergie électrique.

10. Installation de divertissement selon l'une quelconque des revendications précédentes, **caractérisée en ce que** le système d'entraînement est constitué sous la forme d'un système d'entraînement linéaire électromagnétique avec une pluralité de rotors magnétiques (9) et une pluralité de stators (5), qui coopèrent pour l'entraînement des véhicules (12).

11. Installation de divertissement selon la revendication précédente, **caractérisée en ce que** l'entraînement est constitué sous la forme d'un moteur synchrone linéaire.

12. Installation de divertissement selon l'une quelconque des revendications 9 ou 10, **caractérisée en ce que** la pluralité de rotors magnétiques (9) est constituée sur les véhicules (12) de l'installation de divertissement et la pluralité de stators (5) sur le système de rails (7).

13. Installation de divertissement selon l'une quelconque des revendications précédentes, **caractérisée en ce qu'**un générateur à induction est prévu sur au moins un véhicule (12), qui est prévu dans l'accumulateur d'énergie (4) pour la récupération d'alimentation de l'énergie électrique produite.

14. Installation de divertissement selon l'une quelconque des revendications précédentes, **caractérisée en ce que** la pluralité d'unités photovoltaïques (8) et/ou d'unités d'énergie éolienne est répartie en groupes d'unités photovoltaïques et/ou d'unités d'énergie éolienne et au moins un onduleur (14) est attribué à chaque groupe, qui est connecté en amont de l'accumulateur d'énergie (4).

15. Installation de divertissement selon l'une quelconque des revendications précédentes, **caractérisée en ce qu'**un entraînement linéaire électrique avec plusieurs groupes de stators (5) est prévu, qui sont disposés sur un système de rails (7) pour coopérer avec des rotors magnétiques (9) de l'entraînement linéaire magnétique disposés sur les véhicules (12) et une unité d'alimentation en énergie (6) est attribuée à chaque groupe de stators (5), qui est raccordé à l'accumulateur d'énergie (4).

16. Installation de divertissement selon l'une quelconque des revendications précédentes, **caractérisée en ce qu'**une alimentation en énergie a lieu sur un plan de courant continu, sachant qu'un convertisseur continu/continu fonctionne avec un Suivi du point maximal de puissance (SPMP).
